# EUROPEAN PATENT APPLICATION

(11) **EP 4 109 323 A2**
(43) Date of publication of application: **28.12.2022**
(21) Application number: 22191032.6
(22) Date of filing: 18.08.2022
(51) Int. Cl.: G06F 40/279, G06F 40/30

(54) **METHOD AND APPARATUS FOR IDENTIFYING INSTRUCTION, AND SCREEN FOR VOICE INTERACTION**

(30) Priority: 16.09.2021 CN 202111086573
(71) Applicant: BEIJING BAIDU NETCOM SCIENCE TECHNOLOGY CO., LTD., Beijing 100085 (CN)
(72) Inventor: ZHANG, Wenjun, Beijing, 100085 (CN); ZHUO, Zecheng, Beijing, 100085 (CN); GONG, Jian, Beijing, 100085 (CN); HUANG, Qiang, Beijing, 100085 (CN); YOU, Guoan, Beijing, 100085 (CN); PAN, Xu, Beijing, 100085 (CN)
(74) Representative: Studio Torta S.p.A.

(57) **Abstract**

The present disclosure provides a method and an apparatus for identifying an instruction, and a screen for voice interaction, relates to the technical field of artificial intelligence such as natural language processing and cloud computing, and may be applied to, but is not limited to, scenarios such as a smart city. A specific implementation solution includes: acquiring a text vector and at least one word importance corresponding to a to-be-identified instruction; selecting a target number of quasi-matching instructions from a preset instruction library based on the text vector and the at least one word importance, where the instruction library includes a correspondence between an instruction and a text vector of the instruction, and the instruction in the instruction library includes an instruction type and an instruction-targeting keyword; and generating, based on the instruction type and the instruction-targeting keyword in the target number of quasi-matching instructions, an instruction type and an instruction-targeting keyword matching the to-be-identified instruction, thereby matching the instruction in the preset instruction library from both of a semantics dimension and a word bag dimension, and improving an instruction identifying effect.

## Description

### TECHNICAL FIELD

The present disclosure relates to the technical field of artificial intelligence such as natural language processing and cloud computing, and particularly relates to a method and apparatus for identifying an instruction, and a screen for voice interaction.

### BACKGROUND

With the development of Internet technologies, man-machine interaction becomes increasingly frequent. In a scenario of man-machine interaction, it is very important to accurately identify an involved instruction, to determine a user intention.

In existing technologies, a keyword is often extracted from a to-be-identified instruction in accordance with a preset rule, and then an instruction identifying result is determined by comparing whether the keyword is identical with a pre-established instruction-type keyword and an instruction-content keyword.

### SUMMARY

A method and apparatus for identifying an instruction, and a screen for voice interaction are provided.

According to a first aspect, a method for identifying an instruction is provided, including: acquiring a text vector and at least one word importance corresponding to a to-be-identified instruction; selecting a target number of quasi-matching instructions from a preset instruction library based on the text vector and the at least one word importance, where the instruction library includes a correspondence between an instruction and a text vector of the instruction, and the instruction in the instruction library includes an instruction type and an instruction-targeting keyword; and generating, based on the instruction type and the instruction-targeting keyword in the target number of quasi-matching instructions, an instruction type and an instruction-targeting keyword matching the to-be-identified instruction.

According to a second aspect, an apparatus for identifying an instruction is provided, including: an acquiring unit configured to acquire a text vector and at least one word importance corresponding to a to-be-identified instruction; a selecting unit configured to select a target number of quasi-matching instructions from a preset instruction library based on the text vector and the at least one word importance, the instruction library includes a correspondence between an instruction and a text vector of the instruction, and the instruction in the instruction library includes an instruction type and an instruction-targeting keyword; and a generating unit configured to generate, based on the instruction type and the instruction-targeting keyword in the target number of quasi-matching instructions, an instruction type and an instruction-targeting keyword matching the to-be-identified instruction.

According to a third aspect, an electronic device is provided. The electronic device includes: at least one processor; and a memory communicatively connected to the at least one processor; where the memory stores instructions executable by the at least one processor, and the instructions are executed by the at least one processor, such that the at least one processor can execute the method according to any one implementation in the first aspect.

According to a fourth aspect, a non-transitory computer-readable storage medium storing computer instructions is provided, where the computer instructions are used for causing a computer to execute the method according to any one implementation in the first aspect.

According to a fifth aspect, a computer program product is provided, including a computer program, where the computer program, when executed by a processor, implements the method according to any one implementation in the first aspect.

According to a sixth aspect, a screen for voice interaction is provided, including: a voice identifying device configured to identify a received voice to generate a to-be-identified instruction; the electronic device according to the third aspect; and a display device configured to present, based on an instruction type and an instruction-targeting keyword matching the to-be-identified instruction a content matching the to-be-identified instruction.

In the technology according to the present disclosure, by performing matching, using a text vector and at least one word importance corresponding to a to-be-identified instruction, with an instruction in a preset instruction library from both of a semantics dimension and a word bag dimension, to obtain an analysis result of an instruction type and an instruction-targeting keyword of the to-be-identified instruction, thereby reducing an amount of constructed information in the preset instruction library, achieving a better fault-tolerant capability and generalization through semantic matching, and then improving an instruction identifying effect.

It should be understood that contents described in the SUMMARY are neither intended to identify key or important features of embodiments of the present disclosure, nor intended to limit the scope of the present disclosure. Other features of the present disclosure will become readily understood in conjunction with the following description.

### BRIEF DESCRIPTION OF THE DRAWINGS

The accompanying drawings are used for better understanding of the present solution, and do not impose any limitation on the present disclosure. In the accompanying drawings:
Fig. 1 is a schematic diagram of a first embodiment of the present disclosure;
Fig. 2 is a schematic diagram of a second embodiment of the present disclosure;
Fig. 3 is a schematic diagram of an application scenario of a method for identifying an instruction according to an embodiment of the present disclosure;
Fig. 4 is a schematic diagram of an apparatus for identifying an instruction according to an embodiment of the present disclosure; and
Fig. 5 is a block diagram of an electronic device configured to implement the method for identifying an instruction of embodiments of the present disclosure.

### DETAILED DESCRIPTION OF EMBODIMENTS

Example embodiments of the present disclosure are described below with reference to the accompanying drawings, including various details of the embodiments of the present disclosure to contribute to understanding, which should be considered merely as examples. Therefore, those of ordinary skills in the art should realize that various alterations and modifications may be made to the embodiments described here without departing from the scope and spirit of the present disclosure. Similarly, for clearness and conciseness, descriptions of well-known functions and structures are omitted in the following description.

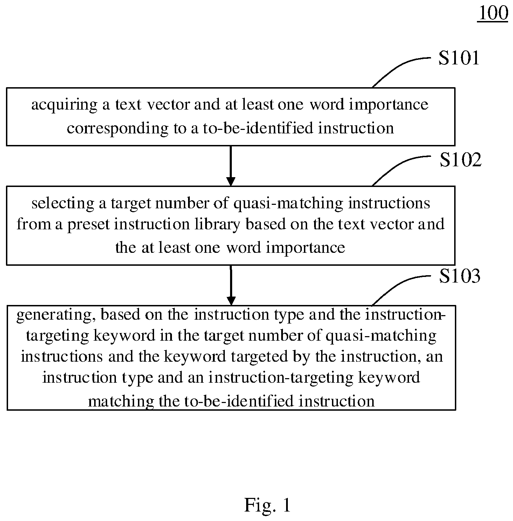

Fig. 1 shows a schematic diagram 100 of a first embodiment of the present disclosure. The method for identifying an instruction includes the following steps.

S101: acquiring a text vector and at least one word importance corresponding to a to-be-identified instruction.

In the present embodiment, an executing body for identifying an instruction may acquire a text vector and at least one word importance corresponding to a to-be-identified instruction by various approaches. As an example, the executing body may acquire the text vector and the at least one word importance corresponding to the to-be-identified instruction locally or from a communicatively connected electronic device by a wired or wireless connection. The word importance may be used for characterizing an importance of a word in the to-be-identified instruction in the whole to-be-identified instruction. As an example, the word importance may be a term frequency or term frequency-inverse document frequency (TF-IDF).

In the present embodiment, the text vector and the at least one word importance corresponding to the to-be-identified instruction may be generated by various approaches. As an example, an executing body for generating the text vector and the at least one word importance corresponding to the to-be-identified instruction may first acquire the to-be-identified instruction. The to-be-identified instruction may be a user-entered text, or may be a text obtained by performing voice identification on a user-entered voice, which is not limited herein. Then, the executing body may convert an acquired to-be-identified text into a corresponding text vector by various text vectorization approaches (for example, using a SentenceBERT model). The text vector may generally have a one-to-one correspondence with the to-be-identified text. For example, a segment of to-be-identified text may be converted into a 128-dimensional floating-point vector. The executing body may further perform word segmentation on the to-be-identified text using various word segmentation tools. Optionally, the executing body may further combine words obtained by over-segmenting, for example, retain complete names of persons and places.

It should be noted that the executing body for generating the text vector and the at least one word importance corresponding to the to-be-identified instruction may be the same as or different from the executing body for identifying a to-be-identified instruction, which is not limited herein.

S102: selecting a target number of quasi-matching instructions from a preset instruction library based on the text vector and the at least one word importance.

In the present embodiment, the preset instruction library may include a correspondence between an instruction and a text vector of the instruction. An instruction in the preset instruction library may include an instruction type and an instruction-targeting keyword. The instruction type is usually used for indicating a type of a to-be-executed operation, such as "open a page," "close a page," "switch a monitoring screen (camera)," and "zoom in." An instruction-targeting keyword is usually used for indicating a specific object targeted by the to-be-executed operation, such as "urban management," "traffic flow," and "intersection XX."

In the present embodiment, as an example, an instruction in the preset instruction library may be "open (a page), urban management, text vector." The text vector may be a vector obtained by performing text vectorization on "open an urban management page."

In the present embodiment, the executing body may select the target number of quasi-matching instructions from the preset instruction library based on matching based on both the text vector and the at least one word importance acquired in step S101 by various approaches. As an example, the executing body may first perform similarity calculations using the text vector acquired in step S101 and a text vector corresponding to each instruction in the preset instruction library, and select instructions corresponding to M text vectors with highest similarities as candidate matching instructions. Then, the executing body may determine a word importance of each word included in an instruction of the candidate matching instructions (for example, a word importance of "open," a word importance of "urban management," and a word importance of "page"). Next, the executing body may select, from the selected candidate matching instructions, the target number of instructions including a word with a word importance greater than or equal to a word importance, in word importances corresponding to the to-be-identified instruction (for example, a word importance of "have a look" and a word importance of "interface"), of an identical word, (for example, "urban management"), for use as the quasi-matching instructions.

It should be noted that the target number may be a number that is preset based on an actual application scenario, e.g., 5. The target number may also be a number that is determined in accordance with a rule, such as the number of instructions, each with a similarity and a word importance both exceeding a preset threshold.

S103: generating, based on the instruction type and the instruction-targeting keyword in the target number of quasi-matching instructions, an instruction type and an instruction-targeting keyword matching the to-be-identified instruction.

In the present embodiment, the executing body may generate the instruction type and the instruction-targeting keyword matching the to-be-identified instruction, based on the instruction type and the instruction-targeting keyword in the target number of quasi-matching instructions selected in step S102 by various approaches.

In the present embodiment, as an example, the executing body may determine an instruction type and the instruction-targeting keyword, each with a highest occurrence number in the target number of quasi-matching instructions, as the instruction type and the instruction-targeting keyword matching the to-be-identified instruction respectively.

In the method provided in the above embodiments of the present disclosure, by performing matching, using a text vector and at least one word importance corresponding to a to-be-identified instruction, with an instruction in a preset instruction library from both of a semantics dimension and a word bag dimension, to obtain an analysis result of an instruction type and an instruction-targeting keyword of the to-be-identified instruction, thereby reducing an amount of constructed information in the preset instruction library, achieving a better fault-tolerant capability and generalization through semantic matching, and then improving an instruction identifying effect in, e.g., application efficiency and identification rate.

In some optional implementations of the present embodiment, the executing body may select the target number of quasi-matching instructions from the preset instruction library based on the text vector and the at least one word importance through the following steps.

S1021: selecting a first number of instructions matching the text vector from the preset instruction library as the first number of pre-matching instructions.

In these implementations, the executing body may select the first number of instructions matching the text vector from the preset instruction library as the pre-matching instructions by various approaches.

As an example, the executing body may first perform similarity calculations using the text vector acquired in step S101 and a text vector corresponding to each instruction in the preset instruction library, and select instructions corresponding to the first number (e.g., 10) of text vectors with highest similarities as candidate matching instructions which is used as the first number of pre-matching instructions.

S1022: selecting a second number of instructions matching the at least one word importance from the preset instruction library as the second number of pre-matching instructions.

In these implementations, the executing body may select the second number (e.g., 10) of instructions matching the at least one word importance from the preset instruction library as second number of the pre-matching instructions by various approaches. The pre-matching instructions at least include one word that is identical with a word indicated by the at least one word importance.

As an example, the word indicated by the at least one word importance corresponding to the to-be-identified instruction, e.g., may be "A" and "B." Then, a pre-matching instruction at least includes one of "A" and "B."

S1023: selecting the target number of instructions from a selected pre-matching instruction set as the quasi-matching instructions.

In these implementations, the executing body may, by various approaches, select the target number of instructions from the pre-matching instruction set, including the first number of pre-matching instructions selected in the above step S1021 and the second number of pre-matching instructions selected in the above step S1022, as the quasi-matching instructions. As an example, in response to determining that there are identical instructions in the first number of pre-matching instructions selected in the above step S1021 and the second number of pre-matching instructions selected in the above step S1022, the executing body may determine the identical instructions as the quasi-match instructions.

Based on the above optional implementations, this solution can detail the approach of selecting the quasi-matching instructions from the preset instruction library, thereby further improving the matching accuracy from the both of semantics and word bag.

Optionally, in some optional implementations of the present embodiment, the executing body may select the second number of instructions matching the at least one word importance from the preset instruction library as the second number of pre-matching instructions through the following steps.

Step I: selecting an instruction including at least one target word from the preset instruction library, to generate a target instruction set.

In these implementations, the at least one target word usually includes a word obtained by performing word segmentation on the to-be-identified instruction. The at least one target word may be consistent with the word indicated by the at least one word importance corresponding to the to-be-identified instruction.

Optionally, the preset instruction library may further include an inverted index, such that the executing body may quickly select the target instruction based on the inverted index to generate a target instruction set.

Step II: for an instruction in the target instruction set, summing up a word importance corresponding to a word matching the at least one target word in the instruction, to generate an instruction importance corresponding to the instruction.

In these implementations, as an example, the at least one target word may include "A" and "B." For an instruction in the target instruction set, if the instruction only includes the target word "A," the instruction importance corresponding to the instruction is a word importance corresponding to the target word "A." If the instruction includes the target word "A" and the target word "B," the instruction importance corresponding to the instruction is a sum of the word importance corresponding to the target word "A" and a word importance corresponding to the target word "B."

Step III: selecting the second number of instructions with top second number of instruction importances as the second number of pre-matching instructions.

In these implementations, the executing body may select the second number of instructions with top second number of instruction importances based on the instruction importances generated in the above step II, and use these selected instructions as the second number of pre-matching instructions.

Based on the above optional implementations, this solution details the approach of selecting the second number of pre-matching instructions based on the word importance, thereby increasing the matching accuracy in the word bag as much as possible.

Optionally, in some optional implementations of the present embodiment, the executing body may select the target number of instructions from the selected pre-matching instruction set through the following steps, as the quasi-matching instructions.

Step I: performing de-duplicating on the selected instructions in the pre-matching instruction set to generate a third number of pre-matching instructions.

In these implementations, the executing body may performing de-duplicating on the instructions in the pre-matching instruction set by various approaches, to generate the third number of pre-matching instructions. The third number is generally less than or equal to a sum of the first number and the second number.

Step II: selecting the target number of instructions from the third number of pre-matching instructions based on a text similarity as the quasi-matching instructions.

In these implementations, the executing body may select the target number of instructions from the third number of pre-matching instructions generated in the above step I based on the text similarity by various approaches, as the quasi-matching instructions. The text similarity may be used for characterizing a similarity between the to-be-identified instruction and an instruction in the third number of pre-matching instructions. As an example, the text similarity may be a similarity between the text vector corresponding to the to-be-identified instruction and a text vector corresponding to an instruction in the pre-matching instructions. The executing body may select the target number of instructions from the third number of pre-matching instructions according to a descending order of text similarities, and using the selected instructions as the quasi-matching instructions. As another example, the executing body may further randomly select the target number of instructions, each with a text similarity greater than a preset similarity threshold, from the third number of pre-matching instructions, and using the randomly selected instructions as the quasi-matching instructions.

Based on the above optional implementations, this solution details the approach of selecting the quasi-matching instructions from the selected pre-matching instruction set, and guarantees a high level of accuracy using accurate semantic matching.

In some optional implementations of the present embodiment, the executing body may generate the instruction type and the instruction-targeting keyword matching the to-be-identified instruction based on the instruction type and the instruction-targeting keyword in the target number of quasi-matching instructions through the following steps.

Step I: for each instruction type and an instruction-targeting keyword in the target number of quasi-matching instructions, summing up a text similarity corresponding to an instruction which corresponds to the instruction type and the instruction-targeting keyword respectively, to generate a sum corresponding to the instruction type and the instruction-targeting keyword.

In these implementations, as an example, the quasi-matching instructions may include an instruction 1 "open, urban management" and an instruction 2 "open, urban traffic." The executing body may determine that a sum corresponding to the instruction type "open" is a sum of a text similarity corresponding to the instruction 1 and a text similarity corresponding to the instruction 2. Similarly, the executing body may determine that a sum corresponding to the instruction-targeting keyword "urban management" is the text similarity corresponding to the instruction 1. The executing body may determine that the accumulated value corresponding to the instruction-targeting keyword "urban traffic" is the text similarity corresponding to the instruction 2.

Step II: determining an instruction type and an instruction-targeting keyword, each with a highest sum, as the instruction type and the instruction-targeting keyword matching the to-be-identified instruction respectively.

In these implementations, the executing body may determine an instruction type and an instruction-targeting keyword, each with a highest sum in sums generated in the above step I, as the instruction type and the instruction-targeting keyword matching the to-be-identified instruction respectively.

Based on the above optional implementations, this solution details the approach of determining the instruction type matching the to-be-identified instruction and the instruction-targeting keyword from the target number of quasi-matching instructions, thereby improving the instruction identifying accuracy.

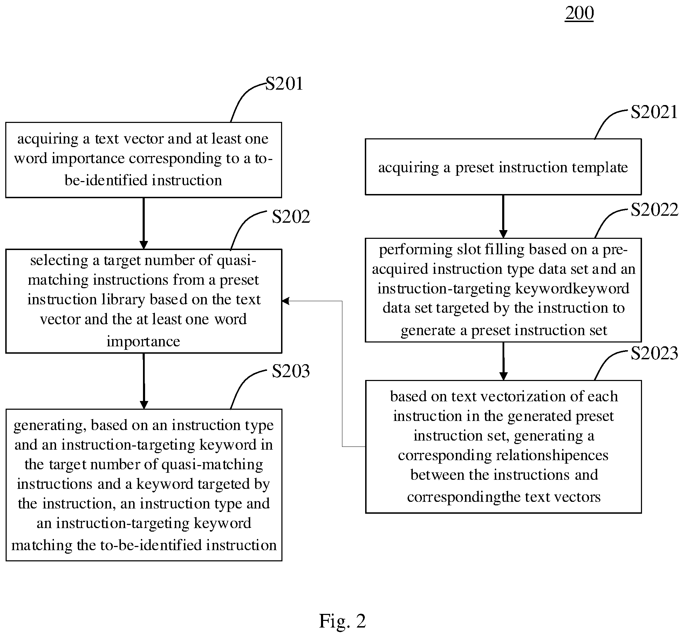

Further referring to Fig. 2, Fig. 2 is a schematic diagram 200 of a second embodiment of the present disclosure. The method for identifying an instruction includes the following steps.

S201: acquiring a text vector and at least one word importance corresponding to a to-be-identified instruction.

S202: selecting a target number of quasi-matching instructions from a preset instruction library based on the text vector and the at least one word importance.

In the present embodiment, the preset instruction library is further generated by the following steps.

S2021: acquiring a preset instruction template.

In the present embodiment, the executing body may acquire the preset instruction template locally or from a communicatively connected electronic device by a wired or wireless connection. The instruction template may include an instruction type slot and an instruction-targeting keyword slot. As an example, the instruction template may be "{open}{page}."

S2022: performing slot filling based on a pre-acquired instruction type data set and an instruction-targeting keyword data set to generate a preset instruction set.

In the present embodiment, the executing body may pre-acquire an instruction type data set and an instruction-targeting keyword data set. The instruction type data set may include various specific instruction types, and the instruction-targeting keyword data set may include various specific instruction-targeting keyword keywords. As an example, the instruction type data set may include "open," "close," "have a look," and the like. The instruction-targeting keyword data set may include "urban management," "cultural tourism," "traffic flow," and the like.

In the present embodiment, the executing body may perform slot filling in a corresponding slot in the above step S2021 based on the pre-acquired instruction type data set and the instruction-targeting keyword data set, and generate various instructions, to form the preset instruction set.

As an example, the instructions in the preset instruction set may include "open an urban management page," "close a traffic flow page," "have a look at a cultural tourism page", and the like.

S2023: based on text vectorization of each instruction in the generated preset instruction set, generating correspondences between instructions and corresponding text vectors.

In the present embodiment, the executing body may generate the correspondences between the instructions and the corresponding text vectors based on text vectorization of each instruction in the preset instruction set generated in the above step S2022 by various approaches. The approach of text vectorization may be consistent with the corresponding description in step S101 of the above embodiment, which is not limited here.

Therefore, the executing body may determine a combination of the preset instruction set and the corresponding relationship between the instruction and the text vector as the preset instruction library.

In some optional implementations of the present embodiment, an instruction in the instruction library may further include an instruction content. Therefore, the executing body may combine an instruction content, an instruction type, and an instruction-targeting keyword into a triple. As an example, the instruction may be "open an urban management page, open a page, urban management."

Based on the above optional implementations, the preset instruction library may be further generated by the following steps.

S2024: performing word segmentation on the instructions in the preset instruction set to generate a word set.

In these implementations, the approach of word segmentation may be consistent with the corresponding description in step S101 of the above embodiment, which is not limited here.

S2025: generating an inverted text index for the preset instruction library by using the word set as an index and using the instruction contents in the instruction library as a database record.

In these implementations, the executing body may generate the inverted text index for the preset instruction library by using words in the word set generated in the above step S2024 as an index and using the instruction contents including the indexed words in the preset instruction library as the database record.

Based on the above optional implementations, this solution can generate the inverted text index for the preset instruction library, thereby providing a basis for improving the instruction identifying speed.

S203: generating, based on an instruction type and an instruction-targeting keyword in the target number of quasi-matching instructions, an instruction type and an instruction-targeting keyword matching the to-be-identified instruction.

The above S201, S202, and S203 may be consistent with S101, S102, and S103 and alternative implementations thereof in the above embodiments respectively. The above description for S101, S102, and S103 and alternative implementations thereof also applies to S201, S202, and S203. The description will not be repeated here.

As can be seen from Fig. 2, the process 200 of the method for identifying an instruction in the present embodiment embodies the step of performing slot filling on a preset instruction template based on a pre-acquired data set to generate the preset instruction library. Therefore, the solution described in the present embodiment establishes an instruction library based on standard instructions for instruction types and an instruction-targeting keyword, rather than a mapping relationship among massive keywords, thereby greatly reducing a data amount such as to-be-collected synonyms, automatically generating instructions by templates, and saving manpower.

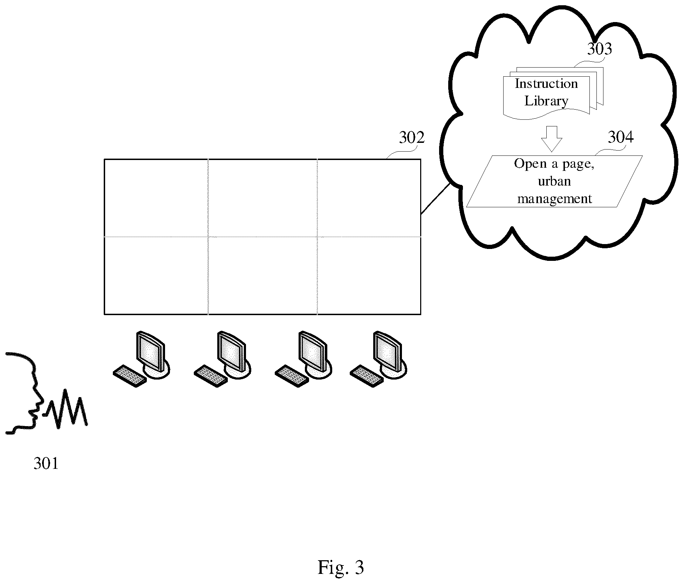

Further referring to Fig. 3, Fig. 3 is a schematic diagram of an application scenario of a method for identifying an instruction according to an embodiment of the present disclosure. In the application scenario of Fig. 3, a large-size smart display screen 302 in a central control room may first acquire a text vector corresponding to "have a look at an urban management page" and acquire TF-IDF values corresponding to "have a look," "urban management," and "page" respectively as word importances. Optionally, the text vector corresponding to the "have a look at an urban management page" and the TF-IDF values corresponding to "have a look," "urban management," and "page" respectively may be obtained by the large-size smart display screen 302 through text vectorization and TF-IDF calculation after word segmentation of the "have a look at an urban management page" said by a user 301. Then, the large-size smart display screen 302 may select a target number of instructions from a preset instruction library 303 based on the text vector and the word importances, as quasi-matching instructions. Then, the large smart display screen 302 may generate, based on an instruction type and an instruction-targeting keyword in the target number of quasi-matching instructions, an instruction type and an instruction-targeting keyword 304 matching a to-be-identified instruction.

At present, one of existing technologies generally includes: first extracting a keyword from a to-be-identified instruction in accordance with a preset rule, and then determining an instruction identifying result by comparing whether the keyword is identical with a pre-established instruction-type keyword and an instruction content keyword, thereby tending to add a step of pre-training an information extracting model, and resulting in poor generalization ability due to difficulty in accurate identification when synonymous are not collected. However, in the method provided in the above embodiments of the present disclosure, by performing matching, using a text vector and at least one word importance corresponding to a to-be-identified instruction, with an instruction in a preset instruction library from both of a semantics dimension and a word bag dimension, to obtain an analysis result of an instruction type and an instruction-targeting keyword of the to-be-identified instruction, thereby reducing an amount of constructed information in the preset instruction library, achieving a better fault-tolerant capability and generalization through semantic matching, and then improving an instruction identifying effect.

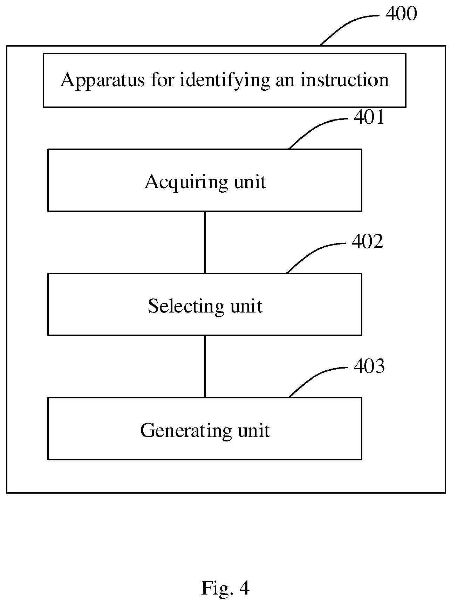

Further referring to Fig. 4, as an implementation of the method shown in the above figures, an embodiment of the present disclosure provides an apparatus for identifying an instruction. The embodiment of the apparatus corresponds to the embodiment of the method shown in Fig. 1 or Fig. 2. The apparatus may be specifically applied to various electronic devices.

As shown in Fig. 4, the apparatus 400 for identifying an instruction of the present embodiment includes an acquiring unit 401, a selecting unit 402, and a generating unit 403. The acquiring unit 401 is configured to acquire a text vector and at least one word importance corresponding to a to-be-identified instruction; the selecting unit 402 is configured to select a target number of quasi-matching instructions from a preset instruction library based on the text vector and the at least one word importance, where the instruction library includes a correspondence between an instruction and a text vector of the instruction, and the instruction in the instruction library includes an instruction type and an instruction-targeting keyword; and the generating unit 403 is configured to generate, based on the instruction type and the instruction-targeting keyword in the target number of quasi-matching instructions, an instruction type and an instruction-targeting keyword matching the to-be-identified instruction.

The related description of steps S101, S102, and S103 in the corresponding embodiment of Fig. 1 may be referred to for specific processing of the acquiring unit 401, the selecting unit 402, and the generating unit 403 in the apparatus 400 for identifying an instruction and the technical effects thereof in the present embodiment, respectively. The description will not be repeated here.

In some optional implementations of the present embodiment, the selecting unit 402 may include: a first selecting module (not shown in the figure) configured to select a first number of instructions matching a text vector from a preset instruction library as the first number of pre-matching instructions; a second selecting module (not shown in the figure) configured to select a second number of instructions matching the at least one word importance from the preset instruction library as the second number of pre-matching instructions; and a third selecting module (not shown in the figure) configured to select a target number of instructions from the selected pre-matching instruction set for use as the quasi-matching instructions.

In some optional implementations of the present embodiment, the second selecting module may be further configured to: select an instruction including at least one target word from the preset instruction library to generate a target instruction set, where the at least one target word includes a word obtained by performing word segmentation on the to-be-identified instruction; for an instruction in the target instruction set, sum up a word importance corresponding to a word matching the at least one target word in the instruction, to generate an instruction importance corresponding to the instruction; and select the second number of instructions with top second number of instruction importances as the second number of pre-matching instructions.

In some optional implementations of the present embodiment, the third selecting module may be further configured to: perform de-duplicating on instructions in the selected pre-matching instruction set to generate a third number of pre-matching instructions, where the third number is less than or equal to a sum of the first number and the second number; and select the target number of instructions from the third number of pre-matching instructions based on a text similarity as the quasi-matching instructions, wherein the text similarity is used for characterizing a similarity between the to-be-identified instruction and an instruction in the third number of pre-matching instructions.

In some optional implementations of the present embodiment, the generating unit 403 may be further configured to: for each instruction type and each instruction-targeting keyword in the target number of quasi-matching instructions, sum up a text similarity corresponding to an instruction which corresponds to the instruction type and the instruction-targeting keyword respectively, to generate a sum corresponding to the instruction type and the instruction-targeting keyword respectively; and determine an instruction type and an instruction-targeting keyword, each with a highest sum, as the instruction type and the instruction-targeting keyword matching the to-be-identified instruction respectively.

In some optional implementations of the present embodiment, the preset instruction library is generated by: acquiring a preset instruction template, where the instruction template includes an instruction type slot and an instruction-targeting keyword slot; performing slot filling based on a pre-acquired instruction type data set and an instruction-targeting keyword data set to generate a preset instruction set; and based on text vectorization of each instruction in the generated preset instruction set, generating correspondences between instructions and corresponding text vectors.

In some optional implementations of the present embodiment, an instruction in the instruction library further comprises an instruction conte; and the preset instruction library may be further generated by: performing word segmentation on the instructions in the preset instruction set to generate a word set; and generating an inverted text index for the preset instruction library by using the word set as an index and using the instruction contents in the instruction library as a database record.

The apparatus provided in the above embodiments of the present disclosure matches, by the selecting unit 402, a text vector and at least one word importance corresponding to a to-be-identified instruction acquired by the acquiring unit 401 with an instruction in a preset instruction library from both of a semantics dimension and a word bag dimension, to obtain a quasi-matching instruction set; and then obtains, by the generating unit 403 based on an instruction type in quasi-matching instructions and an instruction-targeting keyword, an analysis result of an instruction type of the to-be-identified instruction and the instruction-targeting keyword, thereby reducing an amount of constructed information in the preset instruction library, achieving better fault-tolerant capability and generalization through semantic matching, and then improving the instruction identifying effect.

In the technical solution of the present disclosure, the collection, storage, use, processing, transfer, provision, and disclosure of personal information of a user involved are in conformity with relevant laws and regulations, and do not violate public order and good customs.

According to an embodiment of the present disclosure, the present disclosure further provides an electronic device, a readable storage medium, and a computer program product.

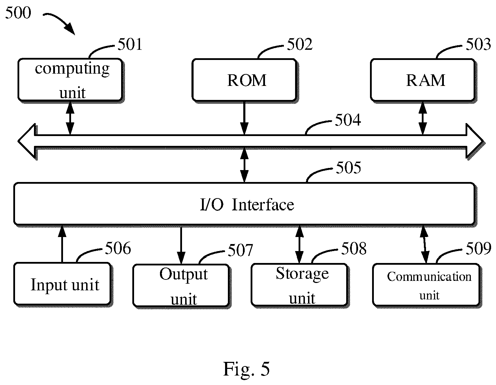

Fig. 5 shows a schematic block diagram of an example electronic device 500 that may be configured to implement embodiments of the present disclosure. The electronic device is intended to represent various forms of digital computers, such as a laptop computer, a desktop computer, a workbench, a personal digital assistant, a server, a blade server, a mainframe computer, and other suitable computers. The electronic device may also represent various forms of mobile apparatuses, such as a personal digital assistant, a cellular phone, a smart phone, a wearable device, and other similar computing apparatuses. The components shown herein, the connections and relationships thereof, and the functions thereof are used as examples only, and are not intended to limit implementations of the present disclosure described and/or claimed herein.

A screen for voice interaction provided in the present disclosure may include: a voice identifying device configured to identify a received voice to generate a to-be-identified instruction; the electronic device as shown in Fig. 5; and a display device configured to present, based on an instruction type and an instruction-targeting keyword matching the to-be-identified instruction, a content matching the to-be-identified instruction. The executing body may pre-acquire the instruction type and a correspondence between the instruction-targeting keyword and a content presented by the instruction. As an example, when the instruction type and the instruction-targeting keyword are "open a page" and "urban management" respectively, the executing body may present an urban management page.

As shown in Fig. 5, the device 500 includes a computing unit 501, which may execute various appropriate actions and processes in accordance with a computer program stored in a read-only memory (ROM) 502 or a computer program loaded into a random-access memory (RAM) 503 from a storage unit 508. The RAM 503 may further store various programs and data required by operations of the device 500. The computing unit 501, the ROM 502, and the RAM 503 are connected to each other through a bus 504. An input/output (I/O) interface 505 is also connected to the bus 504.

A plurality of components in the device 500 is connected to the I/O interface 505, including: an input unit 506, such as a keyboard and a mouse; an output unit 507, such as various types of displays and speakers; a storage unit 508, such as a magnetic disk and an optical disk; and a communication unit 509, such as a network card, a modem, and a wireless communication transceiver. The communication unit 509 allows the device 500 to exchange information/data with other devices via a computer network such as the Internet and/or various telecommunication networks.

The computing unit 501 may be various general-purpose and/or special-purpose processing components having a processing power and a computing power. Some examples of the computing unit 501 include, but are not limited to, a central processing unit (CPU), a graphics processing unit (GPU), various special-purpose artificial intelligence (AI) computing chips, various computing units running a machine learning model algorithm, a digital signal processor (DSP), and any appropriate processor, controller, micro-controller, and the like. The computing unit 501 executes various methods and processes described above, such as the method for identifying an instruction. For example, in some embodiments, the method for identifying an instruction may be implemented as a computer software program that is tangibly included in a machine-readable medium, such as the storage unit 508. In some embodiments, some or all of the computer programs may be loaded and/or installed onto the device 500 via the ROM 502 and/or the communication unit 509. When the computer program is loaded into the RAM 503 and executed by the computing unit 501, one or more steps of the method for identifying an instruction described above may be executed. Alternatively, in other embodiments, the computing unit 501 may be configured to execute the method for identifying an instruction by any other appropriate approach (e.g., by means of firmware).

Various implementations of the systems and technologies described above herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), computer hardware, firmware, software, and/or a combination thereof. The various implementations may include: an implementation in one or more computer programs that are executable and/or interpretable on a programmable system including at least one programmable processor, which may be a special-purpose or general-purpose programmable processor, and may receive data and instructions from, and transmit data and instructions to, a storage system, at least one input apparatus, and at least one output apparatus.

Program codes for implementing the method of the present disclosure may be compiled using any combination of one or more programming languages. The program codes may be provided to a processor or controller of a general-purpose computer, a special-purpose computer, or other programmable data processing apparatuses, such that the program codes, when executed by the processor or controller, cause the functions/operations specified in the flowcharts and/or block diagrams to be implemented. The program codes may be completely executed on a machine, partially executed on a machine, executed as a separate software package on a machine and partially executed on a remote machine, or completely executed on a remote machine or server.

In the context of the present disclosure, the machine-readable medium may be a tangible medium which may contain or store a program for use by, or used in combination with, an instruction execution system, apparatus or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any appropriate combination of the above. A more specific example of the machine-readable storage medium will include an electrical connection based on one or more pieces of wire, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination of the above.

To provide interaction with a user, the systems and technologies described herein may be implemented on a computer that is provided with: a display apparatus (e.g., a CRT (cathode ray tube) or an LCD (liquid crystal display) monitor) configured to display information to the user; and a keyboard and a pointing apparatus (e.g., a mouse or a trackball) by which the user can provide an input to the computer. Other kinds of apparatuses may also be configured to provide interaction with the user. For example, feedback provided to the user may be any form of sensory feedback (e.g., visual feedback, auditory feedback, or haptic feedback); and an input may be received from the user in any form (including an acoustic input, a voice input, or a tactile input).

The systems and technologies described herein may be implemented in a computing system (e.g., as a data server) that includes a back-end component, or a computing system (e.g., an application server) that includes a middleware component, or a computing system (e.g., a user computer with a graphical user interface or a web browser through which the user can interact with an implementation of the systems and technologies described herein) that includes a front-end component, or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and usually interact via a communication network. The relationship between the client and the server arises by virtue of computer programs that run on corresponding computers and have a client-server relationship with each other. The server may be a cloud server, a distributed system server, or a server combined with a blockchain.

It should be understood that the various forms of processes shown above may be used to reorder, add, or delete steps. For example, the steps disclosed in the present disclosure may be executed in parallel, sequentially, or in different orders, as long as the desired results of the technical solutions disclosed in the present disclosure can be implemented. This is not limited herein.

The above specific implementations do not constitute any limitation to the scope of protection of the present disclosure. It should be understood by those skilled in the art that various modifications, combinations, subcombinations, and replacements may be made according to the design requirements and other factors. Any modification, equivalent replacement, improvement, and the like made within the spirit and principle of the present disclosure should be encompassed within the scope of protection of the present disclosure.

## Claims

1. A method for identifying an instruction, comprising:
acquiring (S101) a text vector and at least one word importance corresponding to a to-be-identified instruction;
selecting (S102) a target number of quasi-matching instructions from a preset instruction library based on the text vector and the at least one word importance, wherein the instruction library includes a correspondence between an instruction and a text vector of the instruction, and the instruction in the instruction library includes an instruction type and an instruction-targeting keyword; and
generating (S103), based on the instruction type and the instruction-targeting keyword in the target number of quasi-matching instructions, an instruction type and an instruction-targeting keyword matching the to-be-identified instruction.

2. The method according to claim 1, wherein selecting the target number of quasi-matching instructions from the preset instruction library based on the text vector and the at least one word importance comprises:
selecting a first number of instructions matching the text vector from the preset instruction library as the first number of pre-matching instructions;
selecting a second number of instructions matching the at least one word importance from the preset instruction library as the second number of pre-matching instructions; and
selecting the target number of instructions from a selected pre-matching instruction set for use as the quasi-matching instructions.

3. The method according to claim 2, wherein selecting the second number of instructions matching the at least one word importance from the preset instruction library as the second number of pre-matching instructions comprises:
selecting an instruction including at least one target word from the preset instruction library to generate a target instruction set, wherein the at least one target word includes a word obtained by performing word segmentation on the to-be-identified instruction;
for an instruction in the target instruction set, summing up a word importance corresponding to a word matching the at least one target word in the instruction, to generate an instruction importance corresponding to the instruction; and
selecting the second number of instructions with top second number of instruction importances as the second number of pre-matching instructions.

4. The method according to claim 2 or 3, wherein selecting the target number of instructions from the selected pre-matching instruction set as the quasi-matching instructions comprises:
performing de-duplicating on instructions in the selected pre-matching instruction set to generate a third number of pre-matching instructions, wherein the third number is less than or equal to a sum of the first number and the second number; and
selecting the target number of instructions from the third number of pre-matching instructions based on a text similarity as the quasi-matching instructions, wherein the text similarity is used for characterizing a similarity between the to-be-identified instruction and an instruction in the third number of pre-matching instructions.

5. The method according to claim 4, wherein generating, based on the instruction type and the instruction-targeting keyword in the target number of quasi-matching instructions, the instruction type and the instruction-targeting keyword matching the to-be-identified instruction comprises:
for each instruction type and each instruction-targeting keyword in the target number of quasi-matching instructions, summing up a text similarity corresponding to an instruction which corresponds to the instruction type and the instruction-targeting keyword respectively, to generate a sum corresponding to the instruction type and the instruction-targeting keyword respectively; and
determining an instruction type and an instruction-targeting keyword, each with a highest sum, as the instruction type and the instruction-targeting keyword matching the to-be-identified instruction respectively.

6. The method according to any one of claims 1 to 5, wherein the preset instruction library is generated by:
acquiring (S2021) a preset instruction template, wherein the instruction template includes an instruction type slot and an instruction-targeting keyword slot;
performing (S2022) slot filling based on a pre-acquired instruction type data set and an instruction-targeting keyword data set to generate a preset instruction set; and
based on text vectorization of each instruction in the generated preset instruction set, generating (S2023) correspondences between instructions and corresponding text vectors.

7. The method according to claim 6, wherein an instruction in the instruction library further comprises an instruction content; and
the preset instruction library is further generated by:
performing word segmentation on the instructions in the preset instruction set to generate a word set; and
generating an inverted text index for the preset instruction library by using the word set as an index and using the instruction contents in the instruction library as a database record.

8. An apparatus for identifying an instruction, comprising:
an acquiring unit (401) configured to acquire a text vector and at least one word importance corresponding to a to-be-identified instruction;
a selecting unit (402) configured to select a target number of quasi-matching instructions from a preset instruction library based on the text vector and the at least one word importance, wherein the instruction library includes a correspondence between an instruction and a text vector of the instruction, and the instruction in the instruction library includes an instruction type and an instruction-targeting keyword; and
a generating unit (403) configured to generate, based on the instruction type and the instruction-targeting keyword in the target number of quasi-matching instructions, an instruction type and an instruction-targeting keyword matching the to-be-identified instruction.

9. The apparatus according to claim 8, wherein the selecting unit comprises:
a first selecting module configured to select a first number of instructions matching the text vector from the preset instruction library as the first number of pre-matching instructions;
a second selecting module configured to select a second number of instructions matching the at least one word importance from the preset instruction library as the second number of pre-matching instructions; and
a third selecting module configured to select the target number of instructions from a selected pre-matching instruction set for use as the quasi-matching instructions.

10. The apparatus according to claim 9, wherein the second selecting module is further configured to:
select an instruction including at least one target word from the preset instruction library to generate a target instruction set, wherein the at least one target word includes a word obtained by performing word segmentation on the to-be-identified instruction;
for an instruction in the target instruction set, sum up a word importance corresponding to a word matching the at least one target word in the instruction, to generate an instruction importance corresponding to the instruction; and
select the second number of instructions with top second number of instruction importances as the second number of pre-matching instructions.

11. The apparatus according to claim 9 or 10, wherein the third selecting module is further configured to:
perform de-duplicating on instructions in the selected pre-matching instruction set to generate a third number of pre-matching instructions, wherein the third number is less than or equal to a sum of the first number and the second number; and
select the target number of instructions from the third number of pre-matching instructions based on a text similarity as the quasi-matching instructions, wherein the text similarity is used for characterizing a similarity between the to-be-identified instruction and an instruction in the third number of pre-matching instructions,
preferably, the generating unit is further configured to:
for each instruction type and each instruction-targeting keyword in the target number of quasi-matching instructions, sum up a text similarity corresponding to an instruction which corresponds to the instruction type and the instruction-targeting keyword respectively, to generate a sum corresponding to the instruction type and the instruction-targeting keyword respectively; and
determine an instruction type and an instruction-targeting keyword, each with a highest sum, as the instruction type and the instruction-targeting keyword matching the to-be-identified instruction respectively,
more preferably, the preset instruction library is generated by:
acquiring a preset instruction template, wherein the instruction template includes an instruction type slot and an instruction-targeting keyword slot;
performing slot filling based on a pre-acquired instruction type data set and an instruction-targeting keyword data set to generate a preset instruction set; and
based on text vectorization of each instruction in the generated preset instruction set, generating correspondences between instructions and corresponding text vectors,
wherein an instruction in the instruction library preferably further comprises an instruction content; and
the preset instruction library is further generated by:
performing word segmentation on the instructions in the preset instruction set to generate a word set; and
generating an inverted text index for the preset instruction library by using the word set as an index and using the instruction contents in the instruction library as a database record.

12. An electronic device, comprising:
at least one processor; and
a memory communicatively connected to the at least one processor; wherein
the memory stores instructions executable by the at least one processor, and the instructions are executed by the at least one processor, such that the at least one processor can execute the method according to any one of claims 1 to 7.

13. A non-transitory computer readable storage medium storing computer instructions, wherein the computer instructions are used for causing the computer to execute the method according to any one of claims 1 to 7.

14. A computer program product, comprising a computer program, wherein the computer program, when executed by a processor, implements the method according to any one of claims 1 to 7.

15. A screen for voice interaction, comprising:
a voice identifying device configured to identify a received voice to generate a to-be-identified instruction;
the electronic device according to claim 15; and
a display device configured to present, based on an instruction type and an instruction-targeting keyword matching the to-be-identified instruction, a content matching the to-be-identified instruction.
